# EUROPEAN PATENT APPLICATION

(11) **EP 0 890 533 A1**
(43) Date of publication of application: **13.01.1999**
(21) Application number: 98201884.8
(22) Date of filing: 06.06.1998
(51) Int. Cl.: B65G 39/04, B65G 23/06

(54) **Disassemblable wheel for a conveyor chain**

(30) Priority: 13.06.1997 IT MI971410
(71) Applicant: Rexnord Marbett S.p.A., 42015 Correggio (Reggio Emilia) (IT)
(72) Inventor: Bosano, Fulvio, 15100 Alessandria (IT); Coen, Daniele, 20058 Villasanta (Milano) (IT)
(74) Representative: De Nova, Roberto

(57) **Abstract**

A disassemblable wheel (1) for a conveyor chain, which can be obtained by means of injection-moulding of a plastic material and at the same time ensures an unusually high degree of hygiene, comprises two half-wheels (4,5) which are joined together along a joining plane (A) passing through the axis of the wheel (X-X), each half-wheel (4,5) being formed by two shells (10,11,22,23) juxtaposed along a plane of juxtaposition (B) perpendicular to said axis (X-X), each of the two shells (10,11,22,23) forming a half-wheel (4,5) comprising lugs (18,20) extending beyond the plane of juxtaposition (B) and engaging in the other shell (4,5).

## Description

The present invention relates to a wheel for a conveyor chain, said wheel having a predetermined axis, being disassemblable and comprising two half-wheels joined together along a joining plane passing through said axis, each half-wheel being formed by two shells juxtaposed along a plane of juxtaposition perpendicular to said axis.

As is known, in the industry there exists the need to convey food products and the like during packaging thereof. In order to meet this requirement, conveyor chains, of the closed loop type, are used, wound between wheels which include at least one so-called driving wheel and at least one so-called transmission wheel. These wheels are fixed to respective shafts, by means of the joining of two half-wheels along a plane passing through the axis of the wheel.

Usually these wheels are obtained by means of injection-moulding of a plastic material. In order to avoid unnecessary wastage of material and for correct moulding without shrinkage, these wheels are formed by a rim, a core, a hub and, if necessary, spokes.

These wheels, although satisfactory from various points of view and essentially fulfilling the purpose, are wanting, however, from the point of view of hygiene, since cavities are formed between the rim, the core, the hub and any spokes, becoming inevitable traps for dirt.

Wheels have been proposed, in which the two half-wheels consist of two shells juxtaposed and bonded together so as to form a half-wheel which has flat and smooth side faces on the outside.

In this solution, the cavities are internal and closed and therefore less easily accessible to the dirt. However, this solution is only apparently satisfactory. In fact, in particular after a long period of operation, it has been noted that, despite the juxtaposition of the two shells, the dirt manages - in the long run - to penetrate between the shells and accumulate, well hidden, without any practical possibility for periodic cleaning.

The problem underlying the present invention is that of devising a disassemblable wheel of the type specified, which has structural and functional characteristics such as to overcome the aforementioned drawbacks mentioned with reference to wheels of the prior art.

This problem is solved by a wheel of the type specified, which is characterized in that at least one of the two shells forming a half-wheel comprises lugs extending beyond the plane of juxtaposition and engaging in the other of the two shells.

Further characteristic features and advantages of the disassemblable wheel according to the present invention will emerge from the description given below of an exemplary embodiment thereof, provided by way of a non-limiting example, with reference to the accompanying figures, in which:

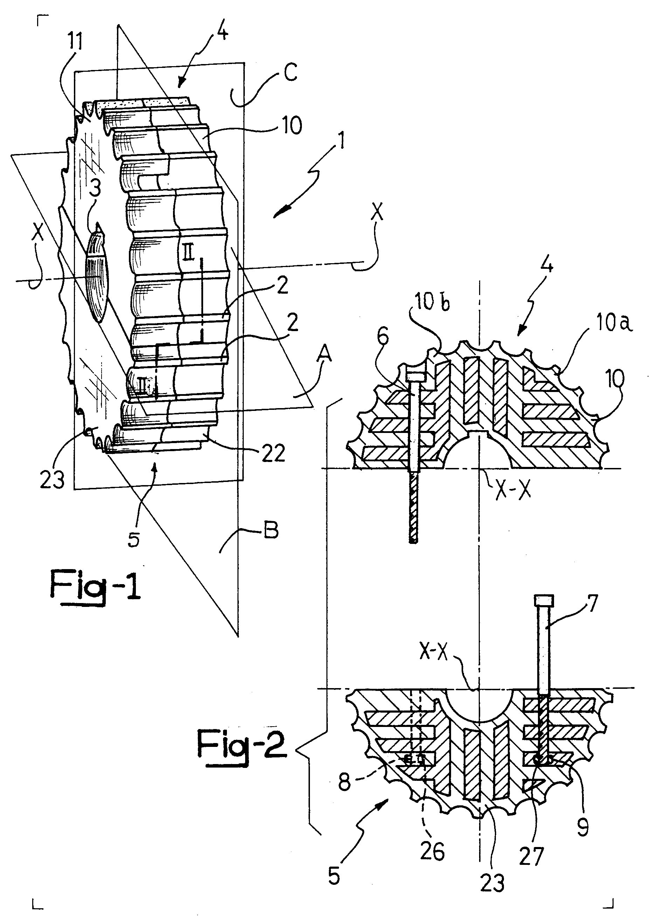

- Figure 1 shows a perspective view of a disassemblable wheel according to the invention;
- Figure 2 shows a cross-sectional view of the disassemblable wheel according to Figure 1, with the half-wheels separated, along the line II-II;

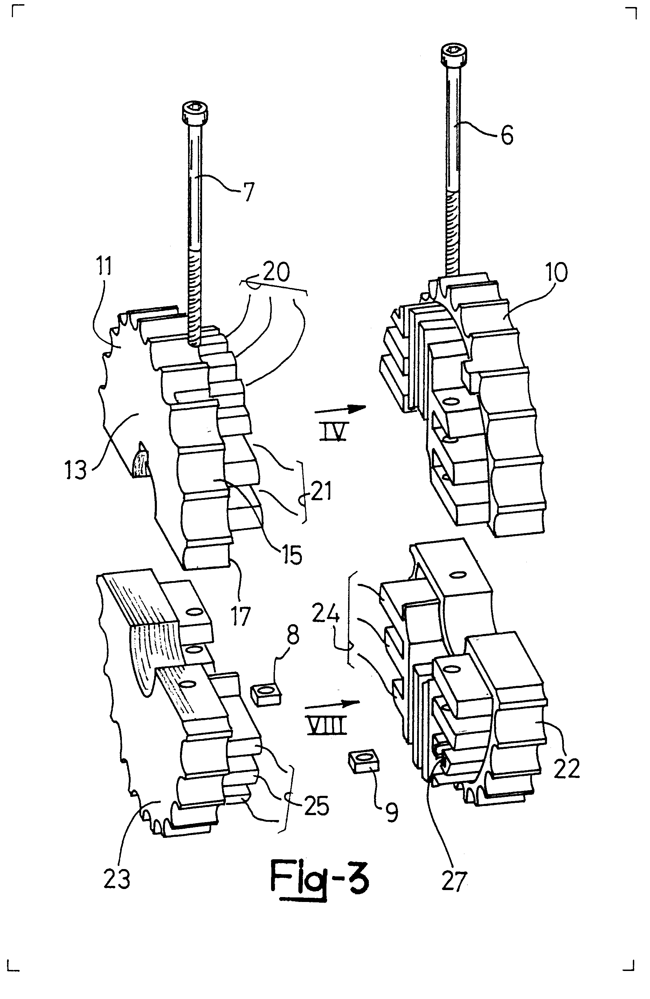

- Figure 3 shows a perspective view of the wheel according to Figure 1, with the parts separated;

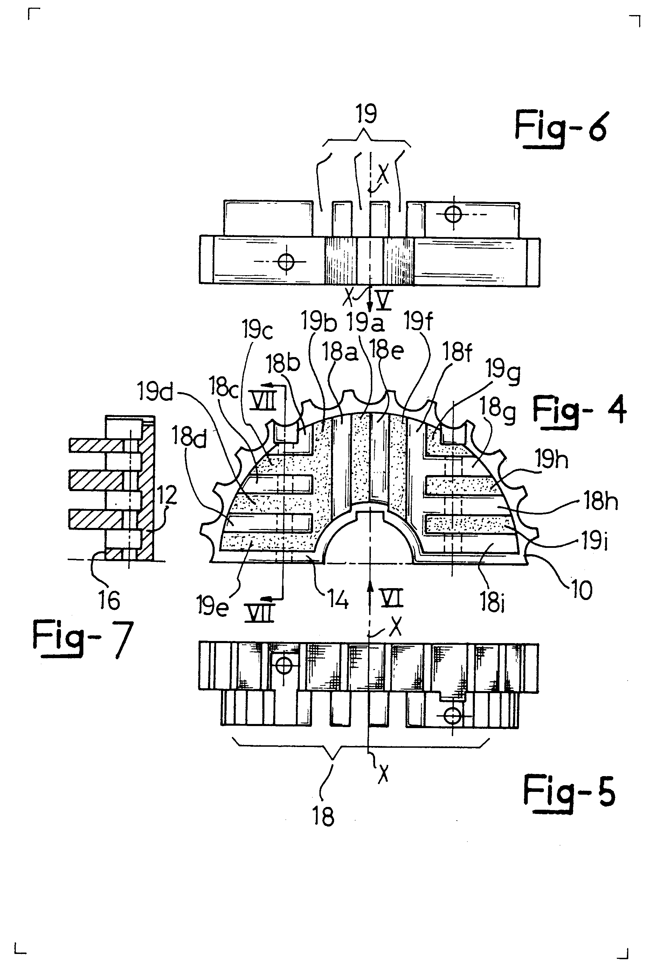

- Figure 4 shows a view of a detail of the wheel according to Figure 4, in the direction of the arrow IV;
- Figure 5 shows a view of the detail according to Figure 4, in the direction of the arrow V;
- Figure 6 shows a view of the detail according to Figure 4, in the direction of the arrow VI;
- Figure 7 shows a sectional view of the detail according to Figure 4, along the line VII-VII;

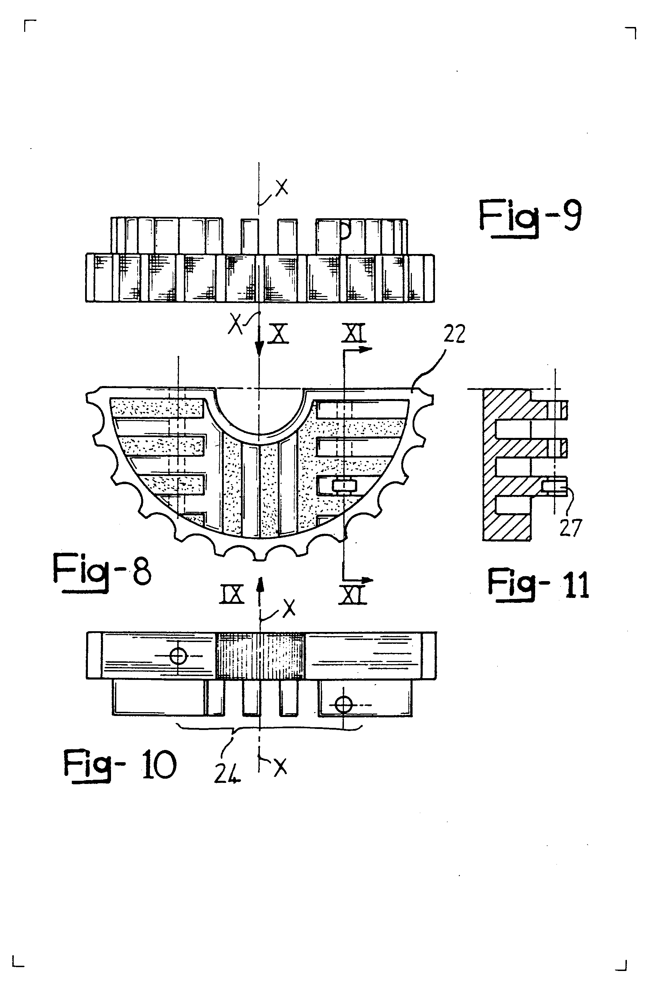

- Figure 8 shows a view of another detail of the wheel according to Figure 4, in the direction of the arrow VIII;
- Figure 9 shows a view of the detail according to Figure 8, in the direction of the arrow IX;
- Figure 10 shows a view of the detail of Figure 8 in the direction of the arrow X; and
- Figure 11 shows a sectional view of the detail according to Figure 8, along the line XI-XI.

With reference to the accompanying figures, 1 denotes in its entirety a wheel for a conveyor chain, not shown in the figure.

The wheel 1 has an axis X-X and is provided with teeth, all indicated by 2, and is of the so-called driving type. For this purpose, the wheel 1 is provided with a cavity 3 for a key, by means of which the wheel is locked in rotation to an appropriate driven shaft, not

shown in the figure. The wheel 1 is of the disassemblable type and comprises, that is, two half-wheels, i.e. a half-wheel 4, in which the aforementioned cavity 3 is formed, and a half-wheel 5.

The half-wheels 4 and 5 are joined together along a joining plane A, passing through the axis X-X, and are locked together by means of two bolts 6 and 7, with two respective nuts 8 and 9, extending perpendicularly with respect to the plane A.

The half-wheel 4 is formed by two shells 10 and 11, which are essentially box-shaped, having respective end walls 12 and 13 and respective side walls 14 and 15, with respective free edges 16 and 17.

The two shells 10 and 11 are juxtaposed along a plane B, perpendicular to the axis X-X, and are arranged in abutment against each other, making mutual contact along the respective free edges 16 and 17.

The shell 10 comprises a plurality of lugs, denoted overall by 18 and comprising in particular lugs 18a, 18b, 18c, 18d, 18e, 18f, 18g, 18h and 18i, or in short lugs 18a-i. The lugs 18a-i project from the end wall 12, defining at the same time in the shell 10 itself a plurality of recesses, denoted overall by 19 and comprising in particular recesses 19a-i. The lugs 18a-i extend perpendicularly with respect to the plane of juxtaposition B, extend beyond the plane of juxtaposition B and engage inside the shell 11, until their ends come into contact with the end wall 13 of the shell 11 itself.

The shell 11 comprises in turn a plurality of lugs, denoted overall by 20. The lugs of the plurality of lugs 20 project from the end wall 13, defining at the same time in the shell 11 a plurality of recesses 21 denoted overall by 21. The recesses of the plurality of recesses 21 are occupied by respective lugs 18a-i of the plurality of lugs 18. The lugs of the plurality of lugs 20 extend perpendicularly with respect to the plane B, extend beyond the plane B and engage in the shell 10, until they come into contact with the end wall 12 of the shell 10 itself, occupying the respective recesses 19a-i.

The lugs of the plurality of lugs 18 and the lugs of the plurality of lugs 20 engage with one another in a comb-like manner, totally occupying the recesses of the plurality of recesses 19 and the recesses of the plurality of recesses 21. In other words the space enclosed between the two juxtaposed shells 10 and 11 is occupied totally.

It should be noted that, in the shell 10, the lugs of the plurality of lugs 18 and the recesses of the plurality of recesses 19 are arranged in an asymmetrical manner with respect to a plane C passing through the axis X-X and perpendicular to the plane B, said plane defining, in the shell 10, two quadrants 10a and 10b. In this way the lugs of a quadrant 10a (or 10b) defined in the shell 10 by the plane C are distributed in the positions in which, in the other quadrant 10b (or 10a) defined in the shell 10 by the same plane C, the recesses are located. The same is applicable to the shell 11. As a result of this special feature, the two shells 10 and 11 consist of two identical parts.

Preferably the lugs have the shape of teeth which are essentially parallelepipedal, extending parallel to the plane C in the central part of the shell and perpendicularly with respect to the plane C in the side parts of the shell itself, adjacent to the joining plane A.

As regards the half-wheel 5, it has a structure which is substantially identical to the structure of the half-wheel 4, being formed by two shells 22 and 23 which are composed of two identical parts provided with respective pluralities of lugs 24 and 25, the lugs of each plurality engaging in a comb-like manner with the lugs of the other plurality, occupying the whole of the space between the two shells.

The shells 10, 11 and the shells 22, 23 are obtained by means of injection-moulding from a suitable plastic material, for example nylon 6, preferably with 30% of glass fibre filler.

It should be noted that the bolts 6 and 7 which lock together the half-wheel 4 with the half-wheel 5 are staggered with respect to the plane B, lying on opposite sides thereof. The bolt 6 passes through the shell 10 and the lugs of the shell 11 which are engaged in the shell 10 itself, as well as the shell 22 and the lugs of the shell 23 which are engaged in the shell 22, while the bolt 7 passes through the shell 11 and the lugs of the shell 10 which are engaged in the shell 11, as well as the shell 23 and the lugs of the shell 22 which are engaged in the shell 23.

The nuts 8 and 9 are housed inset in respective seats 26 and 27 formed in respective lugs projecting, respectively, from the shells 22 and 23.

In this way the bolts 6 and 7 which are fixed onto the nuts 8 and 9 ensure not only the joining together of the two half-wheels, but at the same time ensure also juxtapositioning of the two shells of each half-wheel with respect to one another.

The main advantage of the disassemblable wheel according to the present invention lies in its structural simplicity and its ease of manufacture. At the same time it ensures total hygiene since it is entirely impossible for dirt to become lodged inside it.

The wheel according to the invention is also easy to assemble and install.

Finally the wheel according to the invention also has good vibration damping characteristics and operates in a silent manner.

Obviously the wheel described above may be subject to numerous modifications and variations performed by a person skilled in the art, with the aim of satisfying contingent and specific requirements, all of which, however, are contained within the protective scope of the invention, as defined by the claims which follow.

## Claims

1. Wheel (1) for a conveyor chain, said wheel (1) having a predetermined axis (X-X), being disassemblable and comprising two half-wheels (4,5) joined together along a joining plane (A) passing through said axis (X-X), each half-wheel (4,5) being formed by two shells (10,11,22,23) juxtaposed along a plane of juxtaposition (B) perpendicular to said axis (X-X), characterized in that at least one of the two shells (10,11,22,23) forming a half-wheel (4,5) comprises lugs (18,20) extending beyond the plane of juxtaposition (B) and engaging in the other of the two shells (10,11,22,23).

2. Wheel (1) according to Claim 1, characterized in that both shells (10,11,22,23) forming a half-wheel (4,5) comprise respective lugs (18,20) extending beyond the plane of juxtaposition (B), the lugs (18,20) of the two shells engaging in a comb-like manner.

3. Wheel (1) according to Claim 2, characterized in that, in each of the two shells (10,11,22,23) forming a half-wheel (4,5), a plane (C) passing through the axis (X-X) and perpendicular to the plane of juxtaposition (B), defines two quadrants (10a,10b) and in that the lugs (18) of a quadrant (10a) are distributed in positions in which, in the other quadrant (10b), recesses (19) defined between the respective lugs (18) are distributed, and vice versa.

4. Wheel (1) for a conveyor chain, said wheel having a predetermined axis (X-X) and comprising two shells (10,11,22,23) juxtaposed along a plane of juxtaposition (B) perpendicular to said axis (X-X), characterized in that at least one of the two shells (10,11,22,23) comprises lugs (18,20) extending beyond the plane of juxtaposition (B) and engaging in the other of the two shells.
